Europäisches Patentamt

European Patent Office

Office européen des brevets

(11) Veröffentlichungsnummer: **0 208 164 B1**

(12) **EUROPÄISCHE PATENTSCHRIFT**

(45) Veröffentlichungstag der Patentschrift: **06.05.92**

(21) Anmeldenummer: **86108072.9**

(22) Anmeldetag: **12.06.86**

(51) Int. Cl.5: **G06F 11/00**

(54) **Einrichtung zur fehlertoleranten Ein/Ausgabe von Daten.**

(30) Priorität: **10.07.85 DE 3524647**

(43) Veröffentlichungstag der Anmeldung:
**14.01.87 Patentblatt 87/03**

(45) Bekanntmachung des Hinweises auf die
Patenterteilung:
**06.05.92 Patentblatt 92/19**

(84) Benannte Vertragsstaaten:
**AT CH DE LI NL**

(56) Entgegenhaltungen:
**EP-A- 0 068 099**
**EP-A- 0 120 384**
**EP-A- 0 138 709**

**IBM TECHNICAL DISCLOSURE BULLETIN,**
**Band 24, Nr. 4, September 1981, Seiten**
**2194-2196, New York, US; F.J. AICHELMANN:**
**"Memory application of multiple bit chips"**

(73) Patentinhaber: **SIEMENS AKTIENGESELL-**
**SCHAFT**
**Wittelsbacherplatz 2**
**W-8000 München 2(DE)**

(72) Erfinder: **Busch, Armin, Dipl.-Ing.**
**Nordendorfsweg 6**
**W-3300 Braunschweig(DE)**

**Beschreibung**

Die Erfindung bezieht sich auf eine Einrichtung nach dem Oberbegriff des Patentanspruches 1.

Bei der Steuerung vorzugsweise umfangreicher Prozesse durch Rechner oder Rechnersysteme, beispielsweise der Steuerung von Stellwerks- und Rangieranlagen im Eisenbahnwesen, werden regelmäßig Ein/Ausgabeeinheiten verwendet, welche die Schnittstelle zwischen dem Rechnersystem und den zu steuernden Prozeßelementen darstellen. Diese Ein/Ausgabeeinheiten fächern den rechnerinternen Datenbus auf die elementspezifischen Ein/Ausgabeleitungen auf bzw. sie vereinigen die von der Peripherie angelieferten Daten auf den Datenbus. Jede Ein/Ausgabeeinheit versorgt eine bestimmte Anzahl von Prozeßelementen; sie besteht für die Eingabe aus Trenngattern, ggf. auch Pufferspeichern für flüchtige Daten und für die Ausgabe grundsätzlich aus Pufferspeichern. Zu den Prozeßelementen hat das Rechnersystem mittelbar Zugriff über die Ein/Ausgabeeinheiten; hierzu steuert das Rechnersystem die jeweils zu behandelnde Ein/Ausgabeeinheit per Adresse an und veranlaßt dann das byteweise Einlesen bzw. Ausgeben von Daten in das Rechnersystem bzw. an die angesprochene Ausgabeeinheit. Die Übermittlung von Adressen, Daten und mindestens einem Teil der Steueranweisungen für den Betrieb des Rechnersystems geschieht regelmäßig über ein dafür vorgesehenes Bussystem.

Um Fehlreaktionen des Rechnersystems oder der Prozeßelemente durch fehlerhafte Adressendekodierung an den Ein/Ausgabeeinheiten auszuschließen, ist es bei besonders sicherheitsrelevanten Prozeßsteuerungen üblich, die Adressierung der Ein/Ausgabeeinheiten durch Rückübertragung entweder der Adresse oder eines anderen Kennzeichens an die jeweils adressierende Stelle zu überprüfen, bevor die Daten übermittelt werden. Auch die Daten selbst können vor ihrer Anerkennung rückübertragen und erst nach Überprüfung mit den ausgesandten Daten freigegeben werden (DE-OS 25 47 178). Dieses Verfahren zum gesicherten Austausch von Daten in Datenverarbeitungsanlagen ist zeitaufwendig, ohne daß im Endeffekt aber sichergestellt ist, daß die zu übermittelnden Daten auch tatsächlich und ausschließlich bei den jeweils adressierten Einheiten ankommen.

Die Steuerung - insbesondere der Ein/Ausgabeeinheiten - über ein Bussystem hat neben Vorteilen den grundsätzlichen Nachteil, daß bei bestimmten Störungen auf einem der Busse, beispielsweise bei einem Kurzschluß des Aus/Einganges einer Ein/Ausgabeeinheit, der weitere Betrieb des Rechnersystems nicht mehr möglich ist.

Aufgabe der vorliegenden Erfindung ist es, eine Einrichtung nach dem Oberbegriff des Patentanspruches 1 anzugeben, die es gestattet, durch schaltungstechnische Maßnahmen auf die bisher erforderliche Adreßdekodierung an den Ein/Ausgabeeinheiten zu verzichten und damit die Zuverlässigkeit der Anlage zu erhöhen und die darüber hinaus auch eine hohe Verfügbarkeit aufweist, indem sie die Auswirkungen von Störungen an einzelnen Ein/Ausgabeeinheiten auf die durch die Störung jeweils direkt betroffene Ein/Ausgabeeinheit bzw. bei mehreren durch die Störung direkt betroffene Ein/Ausgabeeinheiten auf diese beschränkt.

Die Erfindung löst diese Aufgabe durch die kennzeichnenden Merkmale des Patentanspruches 1. Vorteilhafte Ausbildungen der erfindungsgemäßen Einrichtung sind in den Unteransprüchen angegeben.

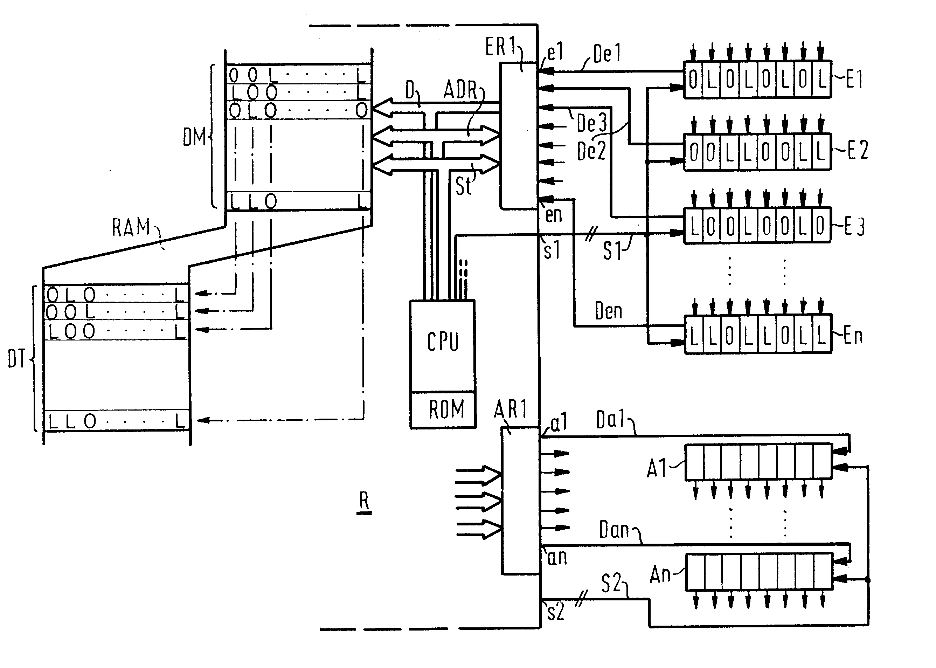

Die Erfindung ist nachstehend anhand eines in der Zeichnung dargestellten Ausführungsbeispieles näher erläutert.

Die Zeichnung zeigt im linken Teil in ausschnittsweiser schematischer Darstellung die zur Abarbeitung von Ein- und Ausgaben erforderlichen internen Teile eines Rechners oder Rechnersystem R und im rechten Teil eine Anzahl Eingabeeinheiten E1 bis En und Ausgabeeinheiten A1 bis An. Über die Eingabeeinheiten werden von nicht dargestellten Prozeßelementen stammende Meldungen an das Rechnersystem gegeben, über die Ausgabeeinheiten vom Rechner stammendes Kommandos an die Prozeßelemente. An jede Ein/Ausgabeeinheit sind bis zu acht Prozeßelemente angeschlossen. Die Ein/Ausgabeeinheiten sind durch Parallel/Serien- bzw. Serien-Parallel-Wandler dargestellt. Die seriellen Ausgänge der Eingabeeinheiten E1 bis En sind über separate Datenleitungen De1 bis Den an zugeordnete Eingänge e1 bis an eines Eingaberegisters ER1 angeschlossen; die seriellen Eingänge der Ausgabeeinheiten A1 bis An sind über separate Datenleitungen Da1 bis Dan an zugeordnete Ausgänge a1 bis an eines Ausgaberegisters AR1 angeschlossen. Ferner führen zu den Ein/Ausgabeeinheiten Takt- und Steuerleitungen S1 bzw. S2 jeweils getrennt für die Eingabeeinheiten und die Ausgabeeinheiten. Die Takt- und die Steuerleitungen sind an zugehörigen Ausgänge s1 bzw. s2 des Rechners angeschlossen. Über die Steuer- und Taktleitungen werden die angeschlossenen Ein- bzw. Ausgabeeinheiten jeweils gemeinsam zur seriellen, taktgesteuerten Eingabe bzw.

Übernahme von Daten veranlaßt. In dem dargestellten Ausführungsbeispiel sind für die Eingabeeinheiten E1 bis E3 und En von den Prozeßelementen stammende beliebige Daten angenommen worden. Die Übernahme dieser Daten durch den Rechner wird nachfolgend näher erläutert.

Die Übernahme von Daten in den Rechner kann sowohl von der Peripherie als auch vom Rechner aus initiiert werden. Liegen Daten von den Eingabeeinheiten E1 bis En zur Übernahme an, so adressiert der Rechner zunächst dasjenige Eingaberegister, über das die zu übernehmenden Daten zuführbar sind; im angenommenen Beispiel ist dies das Eingaberegister ER1. Der Rechner, im vorliegenden Beispiel dargestellt durch ein Prozessor-Modul CPU, Speicher ROM und RAM sowie Adreß-, Daten- und Steuerbus ADR, D und ST, veranlaßt sodann die Ausgabe eines Steuersignals auf diejenige Steuerleitung S1, die zu den abzufragenden Eingabeeinheiten E1 bis En führt. Die einzelnen Speicherplätze der Eingabeeinheiten werden daraufhin taktgesteuert abgefragt und übermitteln die in ihnen gespeicherten Daten an das Eingaberegister ER1. Dabei bilden die aus dem ersten, zweiten, dritten usw. Speicherplatz der Eingabeeinheiten E1 bis En abgefragten Datenbits jeweils Datenworte, die vom Eingaberegister ER1 aufgenommen und unter Steuerung durch den Prozessor Modul CPU in den Arbeitsspeicher RAM des Rechners eingeschrieben werden. Die dort nacheinander abgelegten Datenworte entsprechen nicht den in den einzelnen Eingabeeinheiten abgespeicherten Datenfolgen. Für eine nachfolgende Verarbeitung der übermittelten Daten ist es daher erforderlich, auf Seite des Rechners die ursprüngliche Zuordnung der Daten zu den einzelnen Eingabeeinheiten und damit zu den zugehörigen Prozeßelementen wiederherzustellen.

Hierzu geht die Erfindung von der Erkenntnis aus, daß sich die ursprüngliche Zuordnung der Daten zu den Eingabeeinheiten und damit zu den zugehörigen Prozeßelementen aus den im Arbeitsspeicher RAM zwischen gespeicherten Datenworten dadurch wiederherstellen läßt, daß man in der aus den nacheinander übertragenen Datenworten entstandenen Datenmatrix DM durch Vertauschen von Zeilen und Spalten die Transponierte DT bildet. In der Zeichnung ist der vorgenannten Umsetzvorgang symbolisch durch strichpunktierte Linien verdeutlicht. Der Prozessor-Modul CPU veranlaßt dabei - ggf. unter Benutzung eines internen Registers - das spaltenweise Auslesen der durch die übertragenen Datenworte gebildeten Datenmatrix des Arbeitsspeichers RAM und das Einschreiben der dabei gebildeten neuen Datenworte in einen anderen Bereich des Arbeitsspeichers. Er tut dies unter dem Einfluß eines in einem Festwertspeicher ROM abgelegten Programmes. Nach Abschluß des Umstellvorganges liegen im Arbeitsspeicher RAM die von den Eingabeeinheiten ursprünglich angebotenen Datenfolgen an; sie können jetzt zur eigentlichen Datenverarbeitung im Rechner freigegeben werden.

Ganz ähnlich verhält es sich bei der Ausgabe von Daten. Die vom Rechner für eine bestimmte Gruppe von Ausgabeeinheiten, z.B. die Ausgabeeinheiten A1 bis An erarbeiteten Daten bilden im Arbeitsspeicher des Rechners eine Datenmatrix. Aus dieser Datenmatrix ermittelt der Rechner die Transponierte und überträgt die so umgestellten Daten wortweise an das Ausgaberegister AR1, an dessen Ausgänge a1 bis an die Ausgabeeinheiten A1 bis An über zugeordnete separate Datenleitungen Da1 bis Dan angeschlossen sind. Die Datenworte werden dabei so an das Ausgaberegister AR1 übertragen, das in den Ausgabeeinheiten nach Beendigung des Übertragungsvorganges genau die Daten gespeichert sind, die zuvor vom Rechner für diese Einheiten erarbeitet wurden.

Störungen an einzelnen Ein- oder Ausgabeeinheiten bleiben in ihrer Wirkung auf die durch die Störung jeweils betroffenen Ein/Ausgabeeinheiten begrenzt, weil die durch die Störung nicht betroffenen übrigen Ein/Ausgabeeinheiten von der bzw. den gestörten Ein/Ausgabeeinheiten über die zugeordneten Datenleitungen entkoppelt sind. Damit wird für den Vorgang der Eingabe und der Ausgabe von Daten vom Prozeß aus in den Rechner bzw. vom Rechner an den Prozeß eine Verfügbarkeit erreicht, die weit über der solcher Rechner oder Rechnersysteme liegt, die mit ihren Ein/Ausgabeeinheiten über ein Bussystem kommunizieren.

Für die Ein- bzw. Ausgabe von Daten adressiert der Rechner einzelne Register, beispielsweise das Eingaberegister ER1 oder das Ausgaberegister AR1, und von diesen Registern werden die zu übertragenden Daten an den Rechner bzw. die Ausgabeeinheiten weitergeleitet. Da die Ein/Ausgabeeinheiten vom Rechner mittelbar über die Ein/Ausgaberegister adressiert werden, ist an den Ein/Ausgabeeinheiten selbst keinerlei Adreßdekodierung mehr erforderlich. Damit vermindert sich die Möglichkeit von Dekodierungsfehlern bei der Datenübertragung und dies macht das Ein- und Ausgeben von Daten zuverlässiger als bei Anlagen mit Einzeladressierung der Ein/Ausgabeeinheiten.

Nach einer vorteilhaften Ausbildung der Erfindung ist vorgesehen, die Anzahl der an ein Ein/Ausgaberegister anzuschließenden Ein- bzw. Ausgabeeinheiten jeweils höchstens gleich der Datenbreite der parallelen Datenverarbeitung innerhalb des Rechners zu machen. Bei dieser Begrenzung ist die Datenaufbereitung innerhalb des Rechners außerordentlich wenig aufwendig. Für die Behandlung einer größeren Anzahl von Ein/Ausgabeeinheiten als durch die Datenbreite der parallelen Datenverarbeitung vorgegeben ist, sind die Ein- und die Ausgabeeinheiten in vorteilhafter Weise jeweils an unterschiedliche Ein/Ausgaberegister anzuschließen, die nacheinander vom Rechner adressiert und behandelt werden. Selbstverständlich ist es prinzipiell auch möglich, über jede Ein/Ausgabeeinheit mehr Daten zu übermitteln als durch die Datenbreite der internen Datenverarbeitung vorgegeben ist; allerdings ist dabei der Aufwand für das adressenorientierte Abspeichern der Daten im Arbeitsspeicher und der Aufwand für das Umstellen der Daten im Arbeitsspeicher erheblich größer als bei der zeitmultiplexen Übertragung dieser Daten über mehrere Ein/Ausgaberegister.

In dem vorstehend erläuterten Ausführungsbeispiel werden die von den Eingaberegistern übernommenen bzw. an die Ausgaberegister zu übertragenden Datenworte im Arbeitsspeicher des Rechners zwischengespeichert. Zum Speichern dieser Datenworte und ggf. zum Bilden der Transponierten können auch andere rechnerinterne oder externe Register vorgesehen sein. Die umzustellenden bzw. auszuwertenden oder zu übertragenden Datenworte müssen auch nicht unbedingt blockweise abgespeichert werden; wichtig ist nur, daß die Daten so abgelegt und wieder aufgerufen werden, daß sich der erläuterte Umsetzvorgang ergibt, der die Zuordnung der Daten zu den Prozeßelementen ermöglicht.

Die Datenverarbeitung innerhalb des Rechners wird zweckmäßigerweise durch einen Mikrocomputer realisiert. Dieser Mikrocomputer veranlaßt das Ein- und das Ausgeben von Daten sowie das interne Umstellen der Datenfolgen in seinem Arbeitsspeicher unter Steuerung durch die jeweils zugehörige CPU.

## Patentansprüche

1. Einrichtung zur fehlertoleranten Ein/Ausgabe von Daten in ein bzw. aus einem Rechner oder Rechnersystem unter Verwendung eines Rechnermoduls und externer Ein/Ausgabeeinheiten zur wortweisen Bereitstellung ein- bzw. auszugebender Daten, **dadurch gekennzeichnet,** daß die Ein/Ausgabeeinheiten (E1 bis En, A1 bis An) mit seriellen Aus- bzw. Eingängen ausgestattet sind, die über separate Datenleitungen (De1 bis Den, Da1 bis Dan) mit zugeordneten Ein/Ausgängen (e1 bis en, a1 bis an) von Eingabe/Ausgaberegistern (ER1, AR1) verbunden sind und daß die Takt- und Steuereingänge der Ein- und der Ausgabeeinheiten für die serielle Aus- bzw. Eingabe von Daten über Takt- und Steuerleitungen (S1, S2) jeweils gemeinsam an zugehörige Takt- und Steuerausgänge (s1, s2) des Rechnermoduls (R) angeschlossen sind, daß der Rechnermodul nach Adressierung eines Ein/Ausgaberegisters (ER1, AR1) durch Belegung der jeweils zugehörigen Takt- und Steuerleitungen (S1, S2) über die Datenleitungen (De1 bis Den, Da1 bis Dan) zwischen dem adressierten Ein/Ausgaberegister (ER1, AR1) und den daran angeschlossenen Ein/Ausgabeeinheiten (E1 bis En, A1 bis An) eine wortweise Übertragung von Daten zwischen beiden veranlaßt, durch die bei der Dateneingabe die jeweils ersten, zweiten... n-ten Speicherplätze der einzelnen Eingabeeinheiten (E1 bis En) über das Eingaberegister (ER1) gemeinsam abgefragt werden, die wortweise Abfrage solange fortgesetzt wird, bis alle Daten (Speicherplätze 1 bis n einer Eingabeeinheit E1) in eine Speichermatrix (DM) zeilenweise/spaltenweise eingelesen sind, und zur inneren Auswertung die Datenmatrix (DM) in ihre Transponierte (DT) umgesetzt wird und durch die bei der Datenausgabe die Datenworte für die Ausgabeinheiten (A1 bis An) in einer Datenmatrix hinterlegt und aus dieser die Transponierte gebildet wird, deren in Zeilen/Spaltenrichtung ersten, zweiten ... n-ten Stellen über das Ausgaberegister (AR1) jeweils gemeinsam abgefragt und den Ausgabeeinheiten zugeführt werden, wobei die Abfrage solange fortgesetzt wird, bis alle Ausgabeeinheiten belegt sind.

2. Einrichtung nach Anspruch 1, **dadurch gekennzeichnet,** daß die Eingabe- und die Ausgabeeinheiten jeweils an gesonderte Ein- und Ausgaberegister angeschlossen sind.

3. Einrichtung nach Anspruch 1 und 2, **dadurch gekennzeichnet,** daß die Anzahl der an ein Ein/Ausgaberegister angeschlossenen Ein- bzw. Ausgabeeinheiten höchstens jeweils gleich der Datenbreite der parallelen Datenverarbeitung innerhalb der Datenverarbeitungsanlage ist.

4. Einrichtung nach Anspruch 3, **dadurch gekennzeichnet,** daß für die Behandlung einer größeren Anzahl von Ein- bzw. Ausgabeeinheiten als durch die Datenbreite der parallelen Datenverarbeitung vorgegeben ist, mehrere Ein- bzw. Ausgaberegister vorgesehen sind, die unabhängig voneinander ansteuerbar sind.

5. Einrichtung nach mindestens einem der Ansprüche 1 bis 4, **dadurch gekennzeichnet,** daß der Rechner (R) die Ein/Ausgaberegister (ER1, AR1) jeweils einzeln und unabhängig voneinander aufruft.

**6.** Einrichtung nach mindestens einem der Ansprüche 1 bis 5, **dadurch gekennzeichnet,** daß für die Bildung der Transponierten ein Mikrocomputer als Teil des zu betreibenden Rechnermodules vorgesehen ist.

**7.** Einrichtung nach Anspruch 6**, dadurch gekennzeichnet,** daß die Zwischenspeicherung und die Bildung der Transponierten im Arbeitsspeicher des Mikrocomputers unter Steuerung durch die CPU des Mikrocomputers erfolgt.

## Claims

**1.** Device for the fault-tolerant input/output of data into or out of, respectively, a computer or a computer system with the employment of a computer module and external input/output units for the word-based provision of data to be input or output respectively, characterised in that the input/output units (E1 to En, A1 to An) are equipped with serial outputs and inputs which are connected via separate data lines (De1 to Den, Da1 to Dan) to associated inputs/outputs (e1 to en, a1 to an) of input/output registers (ER1, AR1), and in that the clock and control inputs of the input units and of the output units for the serial output or input of data respectively via clock and control lines (S1, S2) are connected jointly in each case to associated clock and control outputs (s1, s2) of the computer module (R),
in that, after addressing of an input/output register (ER1, AR1), by seizing the respectively associated clock and control lines (S1, S2) via the data lines (De1 to Den, Da1 to Dan) between the addressed input/output register (ER1, AR1) and the input/output units (E1 to En, A1 to An) connected thereto, the computer module initiates a word-based transfer of data between the two,
as a result of which during the data input the respective first, second ... nth memory locations of the individual input units (E1 to En) are jointly interrogated via the input register (ER1), the word-based interrogation is continued until all data (memory locations 1 to n of an input unit E1) have been read row-by-row/column-by-column into a memory matrix (DM), and the data matrix (DM) is converted into its transposed value (DT) for the internal evaluation,
and as a result of which during the data output the data words for the output units (A1 to An) are stored in a data matrix and the transposed value is formed therefrom, whose first, second ... nth positions in the row/column direction are jointly interrogated in each case via the output register (AR1) and are fed to the output units, the interrogation being continued until all output units are occupied.

**2.** Device according to Claim 1, characterised in that the input units and the output units are connected in each case to separate input and output registers.

**3.** Device according to Claim 1 and 2, characterised in that the number of input or output units connected to an input/output register is at most equal to the data width of the parallel data processing within the data processing system in each case.

**4.** Device according to Claim 3, characterised in that, for handling a larger number of input and output units than given by the data width of the parallel data processing, a plurality of input and output registers are provided, which can be addressed independently of one another.

**5.** Device according to at least one of Claims 1 to 4, characterised in that the computer (R) calls up the input/output registers (ER1, AR1) individually and independently of one another in each case.

**6.** Device according to at least one of Claims 1 to 5, characterised in that, for forming the transposed values, a microcomputer is provided as part of the computer module to be operated.

**7.** Device according to Claim 6, characterised in that the temporary storage and the formation of the transposed values take place in the main memory of the microcomputer under the control of the CPU of the microcomputer.

## Revendications

**1.** Dispositif d'entrée/sortie de données, avec une tolérance sur les erreurs, dans ou à partir d'un ordinateur ou d'un système d'ordinateur moyennant l'utilisation d'un module d'ordinateur et d'unités externes d'entrée/sortie pour la préparation, mot par mot, de données devant être entrées ou sorties, caractérisé par le fait que les unités d'entrée/sortie (E1 à En, A1 à An) sont équipées de sorties ou d'entrées série, qui sont raccordées par l'intermédiaire de lignes séparées de transmission de données (De1 à Den, Da1 à Dan), à des entrées/sorties associées (e1 à en, a1 à an) de registres d'entrée/sortie (ER1,AR1), et que les entrées de cadence et de commande des unités d'entrée et de sortie pour la sortie ou l'entrée série de données sont raccordées, des conducteurs de transmission de cadence et de commande (S1,S2), respectivement en commun, à des sorties associées de cadence et de commande (s1,s2) du module d'ordinateur (R),

qu'après adressage d'un registre d'entrée/sortie (ER1,AR1) au moyen de l'occupation des conducteurs respectivement associés de transmission de cadence et de commande (S1,S2), le module d'ordinateur déclenche, par l'intermédiaire des lignes de transmission de données (De1 à Den,Da1 à Dan) entre le registre d'entrée/sortie (ER1,AR1) et les unités d'entrée/sortie (E1 à En, A1 à An), qui y sont raccordées, une transmission de données mot par mot entre ces ensembles, grâce à laquelle, lors de l'entrée des données, les premier, second, ..., n-ème emplacements de mémoire des différentes unités d'entrée (E1,...,En) sont interrogés en commun par l'intermédiaire du registre d'entrée (ER1), l'interrogation mot par mot se prolonge jusqu'à ce que toutes les données (emplacements de mémoire 1 à n d'une unité d'entrée E1) aient été introduites ligne par ligne et colonne par colonne dans une matrice de mémoire (DM), et, pour l'évaluation intérieure, la matrice de données (DM) est convertie en sa transposée (DT), et

grâce à laquelle, lors de la sortie des données, les mots de données pour les unités de sortie (A1 à An) sont mémorisés dans une matrice de données et à partir de cette dernière est formée la transposée, dont respectivement les premier, second ... n-ème emplacements dans la direction des lignes/colonnes sont interrogés respectivement en commun par l'intermédiaire du registre de sortie (AR1) et envoyés aux unités de sortie, l'interrogation étant poursuivie jusqu'à ce que toutes les unités de sortie soient occupées.

2. Dispositif suivant la revendication 1, caractérisé par le fait que les unités d'entrée et les unités de sortie sont raccordées respectivement à des registres particuliers d'entrée et à des registres particuliers de sortie.

3. Dispositif suivant les revendications 1 et 2, caractérisé par le fait que le nombre des unités d'entrée et des unités de sortie, raccordées à un registre d'entrée/sortie est égal au maximum respectivement à la largeur de données du traitement en parallèle de données à l'intérieur de l'installation de traitement de données.

4. Dispositif selon la revendication 3, caractérisé en ce que pour le traitement d'un nombre d'unités d'entrée et de sortie, supérieur à ce qui est prédéterminé par la largeur de données du traitement de données en parallèle, il est prévu plusieurs registres d'entrée et de sortie, qui peuvent être commandés indépendamment les uns des autres.

5. Dispositif suivant au moins l'une des revendications 1 à 4, caractérisé par le fait que l'ordinateur (R) appelle respectivement et individuellement et d'une manière indépendante les uns des autres les registres d'entrée/sortie (ER1,AR1).

6. Dispositif suivant au moins l'une des revendications 1 à 5, caractérisé par le fait que pour la formation de la transposée, il est prévu un micro-ordinateur en tant que partie du module d'ordinateur devant être exploité.

7. Dispositif suivant la revendication 6, caractérisé par le fait que la mémorisation intermédiaire et la formation de la transposée dans la mémoire de travail du micro-ordinateur s'effectuent sous la commande de l'unité CPU du micro-ordinateur.

EP 0 208 164 B1